Europäisches Patentamt

European Patent Office

Office européen des brevets

(19)

(11) Publication number: **0 381 894**

**A1**

# EUROPEAN PATENT APPLICATION

(12)

(21) Application number: 89312798.5

(22) Date of filing: 08.12.89

(51) Int. Cl.⁵: **G01F 23/00**

The title of the invention has been amended (Guidelines for Examination in the EPO, A-III, 7.3).

(30) Priority: 09.12.88 GB 8828761

(43) Date of publication of application:
**16.08.90 Bulletin 90/33**

(84) Designated Contracting States:
**DE FR GB IT**

(71) Applicant: **SEETRU LIMITED**
**Albion Dockside Works**
**Hanover Place Bristol BS1 6UT(GB)**

(72) Inventor: **Varga, Otto Herman**
**Wellclose Lodge Wine Street**
**Bradford on Avon Wiltshire(GB)**
Inventor: **Betts, Frank Herbert**
**Ocho Rios Beacon Lane**
**Winterbourne Bristol BS17 1NU(GB)**

(74) Representative: **Livsey, Gilbert Charlesworth**
**Norris et al**
**HYDE, HEIDE & O'DONNELL 10-12 Priests**
**Bridge**
**London SW15 5JE(GB)**

(54) **Sight gauge installation for the remote sensing of a liquid-level.**

(57) This invention provides a liquid level sight gauge installation comprising at least one liquid level video gauge having an upwardly extending sight tube (10) which at or near its lower end is in fluid flow communication with the content of a tank (11) for holding liquid, a scale (15) extending substantially parallel with said sight tube (10), a video camera (20) for viewing the sight tube (10) and scale (15) and means (56) for moving the camera along the sight tube and scale. A monitor (40) is provided having a screen (41) for displaying the view of the sight tube (10) and scale (15) afforded by the camera (20), there being means (51) provided for generating and displaying on the monitor screen (41) a cursor line (55) which extends generally horizontally across the view of the sight tube (10) and scale (15) displayed on the monitor screen (41). Means (X and Y of 51) are provided for moving that cursor line (55) upwardly and downwardly of the monitor screen (41) through an adjustment zone whose height is of predetermined extent (Z), all so that the cursor line (55) can be adjusted to appear at a desired position in relation to the view displayed on the screen (41).

Fig.2.

## LIQUID LEVEL SIGHT GAUGE INSTALLATION

This invention relates to a liquid level sight gauge installation comprising at least one liquid level video gauge having an upwardly extending sight tube which at or near its lower end is in fluid flow communication with the content of a tank for holding liquid, a scale extending substantially parallel with said sight tube, a video camera for viewing the sight tube and scale and means for moving the camera along the sight tube and scale.

In such sight gauge installations, the camera is moved along the sight tube to a position where a meniscus is located due to the presence of liquid in that tube. Such meniscus will of course be at the same level as the surface of any liquid in the tank. The level of the meniscus is read off on the scale to give an indication of the quantity of liquid in the tank. It is unfortunately not always possible precisely to centre the meniscus in the camera view, with the result that errors in reading the scale may occur. It is particularly important to obtain as accurate a reading of the tank contents as possible when the tank contains alcoholic beverages or other material which is subject to Government tax or other special regulations.

It is an object of this invention to provide a sight gauge installation of the kind referred to which permits a reduction in the occurrence of such errors.

This invention provides a liquid level sight gauge installation comprising at least one liquid level video gauge having an upwardly extending sight tube which at or near its lower end is in fluid flow communication with the content of a tank for holding liquid, a scale extending substantially parallel with said sight tube, a video camera for viewing the sight tube and scale and means for moving the camera along the sight tube and scale, and wherein a monitor is provided having a screen for displaying the view of the sight tube and scale afforded by the camera, there being means provided for generating and displaying on the monitor screen a cursor line which extends generally horizontally across the view of the sight tube and scale displayed on the monitor screen, and there being also, means for moving that cursor line upwardly and downwardly of the monitor screen through an adjustment zone whose height is of predetermined extent, all so that the cursor line can be adjusted to appear at a desired position in relation to the view displayed.

Such an installation helps to reduce errors in reading the scale in two ways. Firstly, the presence of a cursor line across the monitor screen provides a datum line which enables more accurate control of the camera drive so that the camera can more reliably be stopped directly opposite the meniscus, and secondly, when the camera has been stopped, the position of the cursor line can be adjusted to the level of the meniscus in order to compensate for any slight remaining error in camera position. Furthermore, unlike a corporeal cursor line which could be mounted in front of the camera, such an electronic cursor line is safe from mechanical damage.

It will be appreciated that the vertical limits of the cursor line adjustment zone should be such that within that zone there is no appreciable error due to parallax or lens distortion effects.

When using a monochrome monitor, the cursor line may be black or white, the choice being made for ease of viewing in any particular installation. If a colour monitor is used, the cursor line may of course be of any desired colour, and may be chosen to give maximum contrast with the colour of the liquid (if that be coloured) and the colour of the scale and any background to the view displayed.

It is convenient to provide a signal generator at the monitor for generating the cursor line. The cursor line may be generated very simply by controlling one or more lines of the raster displayed. For example to produce a black cursor line, a single line or a group of adjacent lines of the raster may simply be cancelled. The cursor line may be moved up and down the monitor screen by operating on different lines or groups of adjacent lines of the raster.

Preferably, the installation includes manual control means for effecting upwards and downwards movement of the viewing camera, and manual control means for effecting upwards and downwards movement of the cursor line, whereby an operator can align the cursor line with a liquid meniscus in the sight tube as viewed by the camera, and using said cursor line, the operator can read off the height of the liquid meniscus against the scale. This is a very simple way of enabling an operator to align the cursor line with a liquid meniscus in the sight tube as viewed by the camera, and using said cursor line, to read off the height of the liquid meniscus against the scale.

The scale is suitably placed to extend closely adjacent the sight tube over at least a preselected length thereof, and preferably said sight tube is generally cylindrical where it extends adjacent said scale and said scale is placed so that its width extends generally radially from the sight tube cross-section and normally to the camera viewing line. The adoption of either or both of these features promotes accuracy in reading the scale.

As an alternative, the gauge may be placed further forward so that it partially overlaps the sight tube, as perceived by the camera; and it may have its width extending substantially tangentially from the front of the sight tube.

Advantageously, the installation comprises a plurality of said liquid level video gauges and means for selectively displaying their respective camera views at a common monitor screen. Such an arrangement has the great economic advantage that a single monitor and cursor generator can be used for reading a plurality of liquid level video gauges.

Preferably, means is provided for displaying on said monitor screen an index indicative of the camera whose view is displayed at any given time. In this way, one can be sure which gauge it is that is being read at any given time.

The cursor line generator may also be used to generate such index numbers on the monitor screen, a separate number being related to each individual camera according to the switching selection operated in the signal generator unit.

A common control means may be provided for selecting and moving the or each video camera to a position where it can view a liquid level meniscus in its associated sight tube. This too has advantages of economy.

For high-lighting the meniscus and to facilitate its being viewed in the or each tube, such sight tube may be mounted in front of a back-plate bearing a contrasting stripe viewable by said camera through said sight tube. If the sight tube is of lenticular, e.g. round, cross-section, the contrasting stripe may be magnified up to the level of the meniscus in the sight tube, thus giving a sharp contrast in the width of the stripe at the meniscus to facilitate locating the camera correctly, and positioning of the cursor line.

The or each said liquid level video gauge may be enclosed within a weathershield, and said weathershield may be transparent to allow direct viewing by eye of the enclosed sight tube.

Viewing by eye may be facilitated by optical magnifying means, for example by a telescope. Such a telescope may be located near the foot of the sight tube, and an angled mirror may be provided movable along the tube so that the liquid level may be formed with the aid of the telescope and the angled mirror.

In most cases it will be appropriate to arrange for the carriage mechanism, as well as the television camera, to be protected from the ingress of dirt, dust and humidity if installed out of doors. It is therefore envisaged that the front of the gauge structure may be covered over with a flat or curved transparent plastic screen, which would run the entire length of the gauge. This would be arranged in such as way that visual observation of the gauge level is possible at all times, but the screening being provided with a top cover, the structure as a whole would be safe from wind, dust and weather. It would also be convenient to provide a carriage traverse control point locally to the gauge so that the carriage can be moved off-position should it coincide with the liquid level to be observed visually at any moment.

Other situations can be envisaged when the television element alone of the gauge system may be required, in which case the sight tube and camera system may be totally enclosed in a tower or duct with no possibility of external observation. This may be the case when direct visual observation may be difficult to arrange physically, and also where the total gauge structure may be of great height, and it may be advisable to provide a total box construction to offer the required degree of solidity and firmness.

The or each camera is suitably mounted for sliding movement along a plurality of rails, the rails co-extending with the sight tube and the scale to a predetermined extent.

Each video camera may be mounted on a movable carriage, which carriage is slidable on rails running alongside the tube and the scale. Such carriage with advantage carries a shroud locally shielding the sight tube and scale from ambient light, and a light source for illuminating the field of view of the camera is conveniently mounted on the carriage. The camera carriage may thus be so cased that outside and stray light is largely excluded. Thus it is the lighting arranged in the camera carriage which determines the appearance of the television image, and this is not disturbed by extraneous light conditions. If the appropriate form of illumination is chosen, this lighting can be used in daylight as well as in complete darkness, and it will give the same high degree of clarity and definition to the image displayed on the monitor screen.

Accurate reading of a video sight gauge is promoted by correct illumination of the tube, scale and meniscus. This is conveniently provided by appropriate lights disposed around the television camera lens. The disposition and wavelengths of the lights is important in order to achieve a clear view and high definition of the liquid level. Coloured lights, such as red lights have proved successful and so have ultraviolet lights in certain cases. A choice of illumination is a function of the camera characteristics, but correct choice thereof does provide excellent definition of the desired observation.

One particular arrangement of lighting is preferred in order to contrast the liquid meniscus in the gauge tube in a clear and unmistakable way, so as to render it easy to pick out as the camera is traversed along the gauge tube. It consists in providing a light source for the illumination near the bottom of the video camera, arranged to throw some light upwards into the sight tube either directly or by some reflection method from, say, the back plate of the gauge or side walls, which provide guiding for the camera carriage. Lighting arranged at this low level and shining upwards into the sight tube will allow the meniscus to stand out as a sharp, bright line, which contrasts strongly with the sight tube image both above and below the liquid meniscus. This effect is due to the reflection and scatter of light at the meniscus and it provides an effective and economic means of making the liquid level very clearly visible.

This lighting arranged at the bottom of the camera need not be the only illumination in the camera carriage, and other lights may be arranged, say, above the camera to throw clear diffused light onto the gauge scale, so that the level of meniscus can be readily read from it.

The or each sight tube may be of glass or plastics material, and may be firmly mounted on a stiff metal backing plate or profile and connected to the interior of a liquid tank, the content level of which is to be indicated, by valve or other connection means at the bottom of the tank, and also at the top of the tank when a closed-circuit liquid installation is appropriate. The backing plate which carries the sight tube is simply mounted either on the tank itself, or it may be spaced away from the tank on a supporting wall or bulkhead. The backing plate is further adapted to act as a guide for the camera carriage, which is displaced longitudinally along rails alongside the gauge. This displacement is suitably achieved by motorised means through a steel wire system, or other appropriate method. The carriage which is accurately guided by rails fast with the gauge backing plate construction is adapted to mount a miniature television camera in accurate alignment so as to allow a view of the liquid meniscus on a truly horizontal no-parallax plane.

The term backing plate construction here is used in a general sense, and its configuration here is used in a general sense, and its configuration might be such that it is not solely disposed behind the sight tube, but could also extend on one or two sides of the sight tube, so as to form a rigid supporting and guiding structure.

Along the sight tube is placed a graduated scale normally of stainless steel with clear line graduations and numbering. The graduations can be at any desired pitch, but millimetre pitching is widely used. The field of vision of the television camera encompasses the sight tube as well as the graduated scale, so that the television observation, as well as indeed the observation with the naked eye, allows accurate reading of the meniscus against the graduated scale.

A further elaboration is envisaged whereby a sight tube is placed on each side of the scale plate in which case the field of vision of the camera must extend to the two sight tubes with a scale plate in between. Such an arrangement can be desirable to provide uninterrupted vision in cases where sight tubes have to be joined, and where blind spots caused by the joints are staggered so that uninterrupted vision on the one or the other of the sight tubes is possible.

The camera and any lighting power, as well as the video signal, require one or more cables to be connected to the camera and these can either be brought from below or above. In either case, smooth operation of the travelling carriage is promoted by a counter weight system which is conveniently disposed behind the backing plate or in a vertical cavity formed in the backing plate structure. A particularly convenient way to arrange the counter weight is by means of a weighted pulley, which is supported in a cord loop, one side of which is fixed to the top of the gauge structure, the other side of which being led over a fixed pulley at the top of the gauge to the travelling carriage.

The travel of the carriage is suitably effected by an electric motor over a suitable traction and lifting system, the motor being provided with a sensitive inching control. The control of the carriage movement is effected by an observer remotely, near the television screen, and allows him to inch the carriage and camera into position where the cursor line is close to or overlies the meniscus. Any necessary subsequent movement of the cursor line required so that it accurately overlies the view of the meniscus displayed is also effected by the remote observer.

Reference will now be made to the accompanying drawings where one embodiment of the invention is illustrated diagramatically by way of example. In the drawings:-

Figure 1 is a schematic side view showing a liquid container tank equipped with a liquid video gauge.

Figure 1A is a plan view taken on the lines A-A of Figure 1.

Figure 1B is a schematic view taken in the direction of the arrow B of Figure 1.

Figure 2 is a diagram showing a video monitor and other control items for use with a plurality of gauges each of the type shown in Figure 1.

Figure 3 is an enlarged view as might by perceived at the monitor of Figure 2.

Figure 4 is a cross-sectional view taken as it were along the lines A-A of Figure 1, but in this case of one practical embodiment of the liquid level gauge according to the invention.

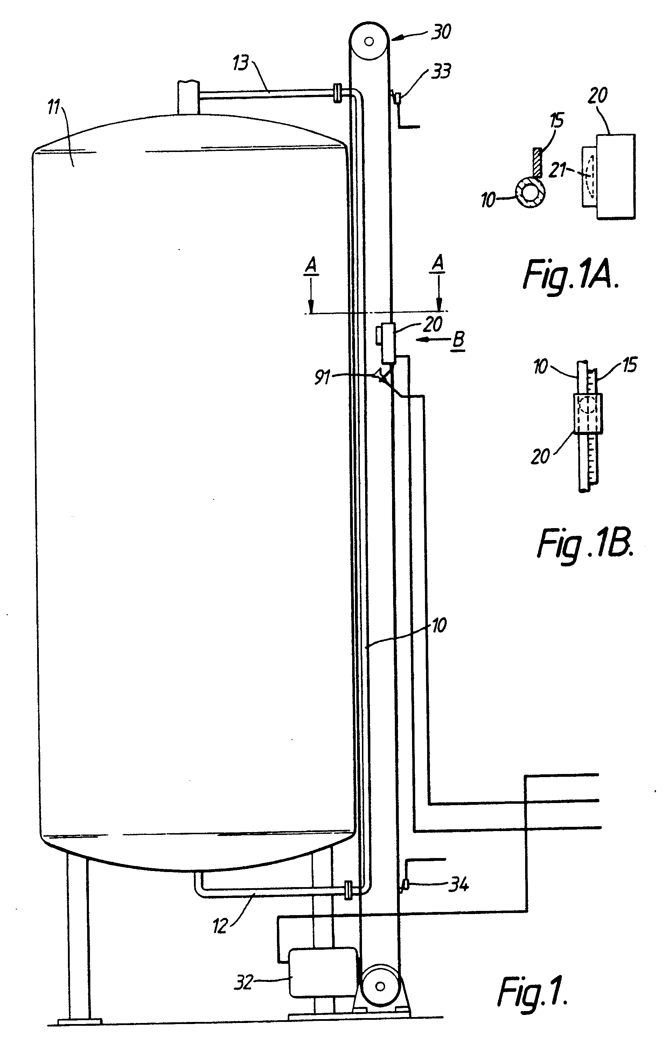

Referring first to Figure 1, a liquid level sight gauge installation according to this invention, includes comprising at least one liquid level video gauge having an upwardly extending sight tube 10 which at or near its lower end is in fluid flow communication with the content of a tank 11 for holding liquid. As shown in the particular embodiment illustrated in Figure 1, the upper end also of the sight tube 10 is placed in fluid flow communication with the interior of the tank 11. The lower and upper connection pipes for the sight tube are indicated at 12 and 13 respectively.

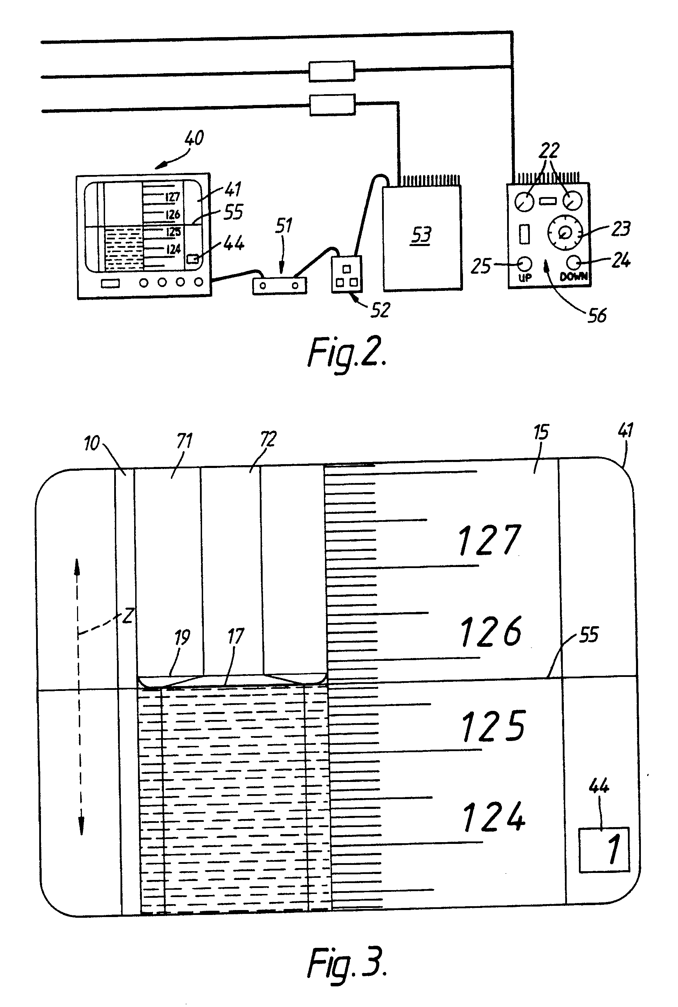

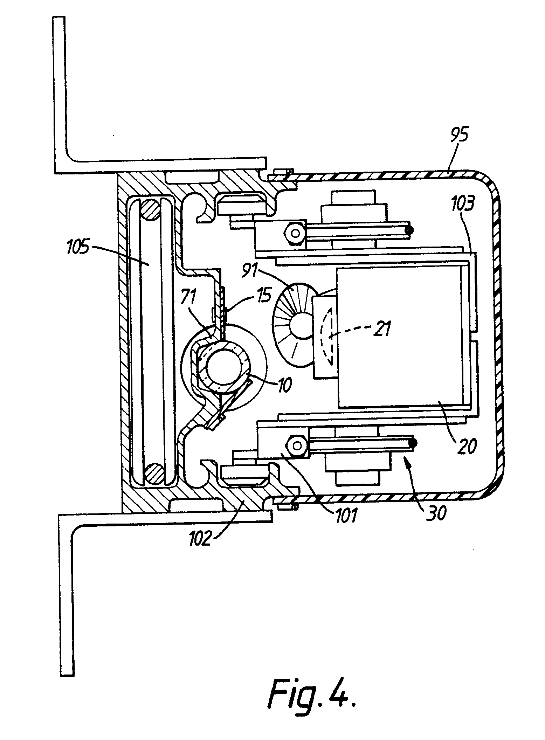

A scale indicated at 15 in Figures 1A and 1B, extends substantially close to and parallel with the sight tube 10. As shown in Figures 1A and 3, the scale is placed to extend closely adjacent the sight tube 10 over at least a preselected length thereof. The sight tube is generally cylindrical where it extends adjacent said scale and the scale is placed so that its width extends generally away from the sight tube cross-section and normally to the camera viewing line. Alternatively, and as shown in Figure 4, the scale 15 may extend truly raially from the circular cross-section of the sight tube 10. The adoption of either or both of these features promotes accuracy in reading the scale.

20 represents a video camera for viewing the sight tube 10 and scale 15. Advantageously, and as is shown in Figure 4, the camera 20 will be mounted upon a carriage 101 slidable along rails 102 which will extend parallel to the sight tube 10 and the scale 15. The sight tube 10 and the scale 15 are arranged to be well within the field of view of the lens 21 of the camera a will be seen from Figures 1A and 1B.

30 represents generally and diagramatically an endless wire and pulley means driven bi-directionally by a motor 32, to move the camera up or down along the sight tube 10 and scale 15. 33 and 34 represent upper and lower limit switches which operate, when abutted by the camera or by part of the carriage carrying the camera, to cut power to the motor 32 driving the wire and pulley means, such cutting of power serving to prevent the camera from being moved out of a height zone of predetermined extent.

Reference will now be made also to Figures 2 and 3. The invention essentially provides a monitor 40 having a screen 41 for displaying the view of the sight tube 10 and scale 15 afforded by the camera 20, and means in the form of a control device 51 is provided for generating and displaying on the monitor screen 41 a cursor line 55 which extends generally horizontally across the view of the sight tube 10 and scale 15 displayed on the monitor screen, as shown in enlarged view in Figure 3.

The scale will be graduated, callibrated and fixed in height relative to the sight tube, so that each scale height indicated will correspond with predetermined accuracy, to the true height of the liquid content within the tank 11 being monitored, such height of the liquid content being indicated by a liquid level in the sight tube 10, all according to principles well known in the art. In Figure 3, the scale 15 is shown on the screen 41 located to the immediate right of the tube 10, and the scale is shown graduated and marked with millimeter divisions, with every ten divisions being marked numerically to indicate a scale height in centimeters.

The invention provides also, that the cursor line generator and control device 51 is equipped with means for moving that cursor line 55 upwardly and downwardly of the monitor screen 41 through an adjustment zone Z whose height is of predetermined extent, all so that the cursor line can be adjusted to appear at a desired position in relation to the view displayed on the screen 41. For example and referring to Figure 3, the cursor line 55 is shown after it has been adjusted, up or down relative to the monitor screen 41, until it coincides with the level of the liquid in the sight tube 10. The cursor line 55 extends horizontally across the monitor screen 41 and can now be used to register the height of the liquid against the scale 15, and a numerical reading of the liquid height can be obtained. In Figure 3, the level of the liquid is indicated at 17 and the meniscus which exists at the surface of the liquid in the tube is indicated at 19. The level shown in Figure 3 is indicated as 1257.5 millimeters, by reading off the cursor line 41 against the scale 15.

Such an installation helps to reduce errors in reading the scale in two ways. Firstly, the presence of the cursor line 55 extending across the monitor screen 41 provides a datum line which enables more accurate control of the camera drive so that the camera can more reliably be stopped directly opposite the meniscus 19, and secondly, when the camera 20 has been stopped, the position of the cursor line 55 can be adjusted, up or down so that it is brought opposite to the level of the meniscus as it appears on the screen 41. This in effect compensates for any slight remaining error in camera position. Furthermore, unlike a corporeal cursor line which could be mounted in front of the camera, such an electronic cursor line is safe from mechanical damage.

It will be appreciated that the system can provide any desired degree of magnification. However, the vertical limits of the cursor line adjustment zone should be such that within that zone, there is no appreciable error due to parallax or lens distortion effects. Typically the degree of adjustment provided, might correspond to one centimeter as perceived on the screen in the example given.

When using a monochrome monitor, the cursor line may be black or white, the choice being made for ease of viewing in any particular installation. If a colour monitor is used, the cursor line may of course be of any desired colour, and may be chosen to give maximum contrast with the colour of the liquid (if that be coloured) and the colour of the scale and any background to the view displayed.

It is convenient to provide the signal generator device 51 adjacent to the monitor for generating the cursor line 55, with the cursor line being generated very simply by controlling one or more lines of the raster displayed. For example to produce a black cursor line, a single line or a group of adjacent lines of the raster may simply be cancelled. The cursor line may be moved up and down the monitor screen by operating on different lines or groups of adjacent lines of the raster. Such adjustment will be effected under manual control by the operator by manual manipulation of an "up" wheel or a "down" wheel at the device 56.

Preferably, the installation includes manual control means for effecting upwards and downwards movement of the viewing camera 20, together with the manual control means for effecting upwards and downwards movement of the cursor line 55. By these means, the operator can align the cursor line 55 with the liquid meniscus 19 in the sight tube 10 as viewed by the camera 20, and using the cursor line adjustment, (of its height as appearing on the monitor screen 41), the operator can read off the height of the liquid meniscus against the scale 15.

Thus it is easy for an operator to align the cursor line with a liquid meniscus in the sight tube as viewed by the camera, and using said cursor line, to read off the height of the liquid meniscus against the scale.

Advantageously, the installation comprises a plurality of said liquid level video gauges and means for selectively displaying their respective camera views at a common monitor screen. Such an arrangement has the great economic advantage that a single monitor and cursor generator can be used for reading a plurality of liquid level video gauges each respective gauge being associated with and appropriately installed against its own respective liquid containing tank.

Thus for each tank 11, there will be a sight tube 10, and alongside this, a scale 15, and viewing these, a camera 20, all as in Figure 1. But the signal from all the cameras of a group can be fed, selectively under operator control to a single monitor. Preferably, means is provided for displaying on the single monitor screen an index indicative of the camera whose view is displayed at any given time. In this way, one can be sure which gauge it is that is being read at any given time. The cursor line generator may also be used to generate such index numbers on the monitor screen, a separate number being related to each individual camera according to the switching selection operated in the signal generator unit. A common control means may be provided for selecting and moving each video camera to a position where it can view a liquid level meniscus in its associated sight tube. This too has advantages of economy.

Thus, and referring to Figure 2, 53 represents a device which can provide connection with selected ones of a group of cameras and 52 represents a control device for effecting such selection. The device 52 or the device 53 will conveniently include means for displaying on the monitor an indicator corresponding to the particular camera selected, and such an indication is shown by way of example at 44 in Figure 3.

In Figure 2, 56 represents a motor control device which is capable of controlling selected motors of a group of video gauges. For example it may have control means 22 for selecting an individual motor 30; control means 23 for selecting the speed of operation of the selected motor; control means 24 and 25 for selecting the mode of operation of the selected motor 30 so as to move the associated camera 20 up or down. For example the group of gauges may total sixteen, and the device 56 will be used to select one of the sixteen gauges and then to control the motor of that gauge so that the camera of that gauge can then be moved up or down at a selected speed.

When a gauge is selected by means of the device 56 it is of course necessary to select also the camera of that gauge using the devices 52 and 53.

For high-lighting the meniscus and to facilitate its being viewed in the or each tube, such sight tube may be mounted in front of a back-plate bearing a contrasting stripe viewable by said camera through said sight tube. If the sight tube is of lenticular, e.g. round, cross-section, the contrasting stripe may be magnified up to the level of the meniscus in the sight tube, thus giving a sharp contrast in the width of the stripe at the meniscus to facilitate locating the camera correctly, and positioning of the cursor line. Such a back plate is indicated at 71 in Figure 3, and such a contrasting stripe is indicated at 72.

Referring now to Figure 4, the or each said liquid level video gauge may be enclosed within a weathershield 95, and said weathershield may be transparent to allow direct viewing by eye of the enclosed sight tube. Viewing by eye may be facilitated by optical magnifying means, for example by a telescope (not shown). Such a telescope may be located near the foot of the sight tube 10, and an angled mirror (not shown) may be provided movable along the tube so that the liquid level may be formed with the aid of the telescope and the angled mirror.

In most cases it will be appropriate to arrange for the carriage mechanism 101, as well as the television camera 20, to be protected from the ingress of dirt, dust and humidity if installed out of doors. It is therefore envisaged that the front of the gauge structure may be covered over with a flat or curved transparent plastic screen forming weathershield 91, which would run the entire length of the gauge. This would be arranged in such as way that visual observation of the gauge level is possible at all times, but the screening being provided with a top cover, the structure as a whole would be safe from wind, dust and weather. It would also be convenient to provide a carriage traverse control point locally to the gauge so that the carriage can be moved off-position should it coincide with the liquid level to be observed visually at any moment.

Other situations can be envisaged when the television element alone of the gauge system may be required. In that case the sight tube and camera system may be totally enclosed in a tower or duct with no possibility of external observation. This may be the case when direct visual observation may be difficult to arrange physically, and also where the total gauge structure may be of great height, and it may be advisable to provide a total box construction to offer the required degree of solidity and firmness.

As already mentioned, the or each camera is suitably mounted for sliding movement along a plurality of rails 91, the rails co-extending with the sight tube and the scale to a predetermined extent. Each video camera may be mounted on a movable carriage 101, which carriage is slidable on the rails running alongside the tube and the scale. Such carriage with advantage carries a shroud 103 locally shielding the sight tube and scale from ambient light, and a light source (shown at 91 in Figure 1) for illuminating the field of view of the camera is conveniently mounted on the carriage. The camera carriage 101 may thus be so cased that outside and stray light is largely excluded. Thus it is the lighting arranged in the camera carriage which determines the appearance of the television image, and this is not disturbed by extraneous light conditions. If the appropriate form of illumination is chosen, this lighting can be used in daylight as well as in complete darkness, and it will give the same high degree of clarity and definition to the image displayed on the monitor screen.

Accurate reading of a video sight gauge is promoted by correct illumination of the tube, scale and meniscus. This is conveniently provided by appropriate lights disposed around the television camera lens.

The disposition and wavelength of the lighting is important in order to achieve a clear view and high definition of the liquid level. Coloured lights, such as red lights have proved successful and so have ultraviolet lights in certain cases. A choice of illumination is a function of the camera characteristics, but correct choice thereof does provide excellent definition of the desired observation.

One particular arrangement of lighting is preferred in order to contrast the liquid meniscus in the gauge tube in a clear and unmistakable way, so as to render it easy to pick out as the camera is traversed along the gauge tube. It consists in providing a light source for the illumination near the bottom of the video camera 20, as indicated at 91 in Figure 1, the light source being arranged to throw some light upwards into the sight tube either directly or by some reflection method from, say, the back plate of the gauge or side walls, which provide guiding for the camera carriage. Lighting arranged at this low level and shining upwards into the sight tube from a level below that of the camera lens 21 will allow the meniscus 19 to be perceived at the monitor screen 41, to stand out as a sharp, bright line, which contrasts strongly with the sight tube image both above and below the liquid meniscus. This effect is due to the reflection and scatter of light at the meniscus and it provides an effective and economic means of making the liquid level very clearly visible.

This lighting source 91 arranged at the bottom of the camera need not be the only illumination in the camera carriage, and other lights may be arranged, say, above the camera to throw clear diffused light onto the gauge scale, so that the level of meniscus can be readily read from it.

The or each sight tube may be of glass or plastics material, and may be firmly mounted on a stiff metal backing plate or profile and connected to the interior of a liquid tank, the content level of which is to be indicated, by valve or other connection means at the bottom of the tank, and also at the top of the tank when a closed-circuit liquid installation is appropriate.

The backing plate 71 which carries the sight tube is simply mounted either on the tank itself, or it may be spaced away from the tank on a supporting wall or bulkhead. The backing plate is suitably adapted for example by having rails 102 integral with or attached to it, to act as a guide for the camera carriage 101, which is displaced longitudinally along such rails running alongside the gauge. This displacement is suitably achieved by motorised means through a steel wire system, or other appropriate method. The carriage 101 which is accurately guided by the rails fast with the gauge backing plate 71 is adapted to mount the miniature television camera 20 in accurate alignment, all so as to allow a view of the liquid meniscus on a truly horizontal no-parallax plane.

A further elaboration is envisaged whereby a sight tube 10 is placed on each side of the scale plate 15 in which case the field of vision of the camera must extend to the two sight tubes with a scale plate in between. Such an arrangement of twin sight tubes can be desirable to provide uninterrupted vision in cases where sight tubes have to be joined, and where blind spots caused by the joints are staggered so that uninterrupted vision on the one or the other of the sight tubes is possible. In this way the level can be measured over the full height of the liquid columns in the two sight tubes.

The camera and any lighting power, as well as the video signal, require one or more cables to be connected to the camera and these can either be brought from below or above. In either case, smooth operation of the travelling carriage is promoted by a counter weight system indicated generally at 105 in Figure 4 which is conveniently disposed behind the backing plate or in a vertical cavity formed in the backing plate structure. A particularly convenient way to arrange the counter weight is by means of a weighted pulley, which is supported in a cord loop, one side of which is fixed to the top of the gauge structure, the other side of which being led over a fixed pulley at the top of the gauge to the travelling carriage 101.

**Claims**

1. A liquid level sight gauge installation comprising at least one liquid level video gauge having an upwardly extending sight tube which at or near its lower end is in fluid flow communication with the content of a tank for holding liquid, a scale extending substantially parallel with said sight tube, a video camera for viewing the sight tube and scale and means for moving the camera along the sight tube and scale, and wherein a monitor (40) is provided having a screen (41) for displaying the view of the sight tube (10) and scale (15) afforded by the camera (20), there being means (51) provided for generating and displaying on the monitor screen (41) a cursor line (55) which extends generally horizontally across the view of the sight tube (10) and scale (15) displayed on the monitor screen (41), and there being also, means (X and Y of 51) for moving that cursor line (55) upwardly and downwardly of the monitor screen (41) through an adjustment zone whose height is of predetermined extent (Z), all so that the cursor line (55) can be adjusted to appear at a desired position in relation to the view displayed on the screen (41).

2. An installation according to claim 1, and including manual control means (24 and 25 of 56) for effecting upwards and downwards movement of the viewing camera (20), and manual control means (X and Y of 51) for effecting upwards and downwards movement of the cursor line (55), whereby an operator can align the cursor line (55) with a liquid level (17) in the sight tube (10) as viewed by the camera (20), and using said cursor line (55), the operator can read off the height of the liquid level (17) against the scale (15).

3. An installation according to either of claims 1 and 2, wherein said scale (15) is placed to co-extend closely adjacent the sight tube (10) over at least a preselected length thereof.

4. An installation according to any one or more of claims 1 to 3, wherein said sight tube (10) is generally cylindrical where it extends alongside said scale (15) and wherein said scale (15) is placed adjacent the sight tube so that so that its width extends generally radially from the sight tube cross-section and normally to the camera viewing line.

5. An installation according to any one or more of the preceding claims, wherein such installation comprises a plurality of said liquid level video gauges and means for selectively displaying their respective camera views at a common monitor screen (41).

6. An installation according to claim 5, wherein means is provided for displaying on said monitor screen (41) an index (44) indicative of the camera (20) whose view is displayed at any given time.

7. An installation according to claim 5 or 6, wherein common control means (52, 53,56) is provided for selecting and moving a said video camera (20) to a position where it can view a liquid level in its associated sight tube (10).

8. An installation according to any preceding claim, wherein the or at least one said sight tube (10) is mounted in front of a back-plate (71) bearing a contrasting stripe (72) viewable by said camera (20) through said sight tube (10).

9. An installation according to any preceding claim, wherein the or at least one said liquid level video gauge is enclosed within a weathershield (95).

10. An installation according to claim 9, wherein the or at least one said weathershield (95) is transparent to allow direct viewing of the enclosed sight tube.

11. An installation according to any preceding claim, wherein there is at least one video camera (20) mounted on a movable carriage (101), which carriage is slidable on rails (102) running alongside the tube (10) and the scale (15), and wherein said carriage (101) carries a shroud (103) locally shielding the sight tube (10) and scale (15) from ambient light, together with a light source (91) for illuminating the field of view of the camera (20).

12. An installation according to any one or more of the preceding claims 1 to 10, and wherein the or each camera (20) is mounted for sliding movement along a plurality of rails (102), the rails co-extending with the sight tube and the scale to a predetermined extent, said rails (102) forming an integral part of a backing plate (71), said sight tube (10) and said scale (15) being mounted on said backing plate (71).

Fig.1A.

Fig.1B.

Fig.1.

Fig.2.

Fig.3.

Fig. 4.

| DOCUMENTS CONSIDERED TO BE RELEVANT | | | EP 89312798.5 |
|---|---|---|---|

| Category | Citation of document with indication, where appropriate, of relevant passages | Relevant to claim | CLASSIFICATION OF THE APPLICATION (Int Cl⁵) |
|---|---|---|---|
| A | <u>DE - A1 - 2 928 718</u><br>(ALKEM)<br>* Fig.; claims 1,3,5 *<br>-- | 1,3,4 | G 01 F 23/00 |
| A | <u>US - A - 4 587 845</u><br>(VARGA)<br>* Abstract; fig. 2; claim 1 *<br>---- | 1,3,4 | |
| | | | TECHNICAL FIELDS SEARCHED (Int Cl⁵) |
| | | | G 01 F 23/00 |

The present search report has been drawn up for all claims

| Place of search | Date of completion of the search | Examiner |
|---|---|---|
| VIENNA | 23-02-1990 | FIALLA |

CATEGORY OF CITED DOCUMENTS

X : particularly relevant if taken alone
Y : particularly relevant if combined with another document of the same category
A . technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82